Europäisches Patentamt

European Patent Office

Office européen des brevets

(19)

(11) Veröffentlichungsnummer: **0 430 886 A1**

## (12) EUROPÄISCHE PATENTANMELDUNG

(21) Anmeldenummer: 90810908.5

(22) Anmeldetag: 22.11.90

(51) Int. Cl.$^5$: **C02F 3/06, C02F 3/10**

(30) Priorität: 01.12.89 CH 4296/89

(43) Veröffentlichungstag der Anmeldung:
05.06.91 Patentblatt 91/23

(84) Benannte Vertragsstaaten:
CH DE IT LI

(71) Anmelder: CIBA-GEIGY AG
Klybeckstrasse 141
CH-4002 Basel (CH)

(72) Erfinder: Thüer, Markus, Dr.
Schwalbenweg 2
CH-4310 Rheinfelden (CH)
Erfinder: Stucki, Gerhard, Dr.
Egghof
CH-4466 Ormalingen (CH)
Erfinder: Bentz, Rolf, Dr.
Unterer Rheinweg 86
CH-4057 Basel (CH)

(54) Wasserreinigungsverfahren.

(57) Verfahren zur Wasserreinigung wobei man das mit halogenierten Kohlenwasserstoffen belastete Wasser durch einen oder mehrere hintereinander angeordnete Fest- oder Fliessbettreaktoren leitet, welche mit einem Adsorptionsmaterial, das von einem oder mehreren Mikroorganismen besiedelt ist, gefüllt sind; hierdurch wird eine fast vollständige Eliminierung der halogenierten Kohlenwasserstoffe erreicht.

EP 0 430 886 A1

# WASSERREINIGUNGSVERFAHREN

Die vorliegende Erfindung betrifft ein neues Verfahren zur Reinigung von halogenierte Verbindungen enthaltendem Wasser, sowie eine Vorrichtung zur Durchführung des Verfahrens.

Das Verfahren ist dadurch gekennzeichnet, dass man mit halogenierten Verbindungen belastetes Wasser durch einen Fest- oder Fliessbettreaktor leitet, welcher mit einem Adsorptionsmaterial, das von einem oder mehreren Mikroorganismen besiedelt ist, gefüllt ist.

In einer weiteren Ausprägung des Verfahrens können mehrere Fest- bzw. Fliessbettreaktoren hintereinander angeordnet sein.

Durch die erfindungsgemässe Massnahme, dass die Mikroorganismen auf dem Adsorptionsmittel angesiedelt sind ist es möglich, über 90% der halogenierten Kohlenwasserstoffe, die das Wasser belasten, zu entfernen. Damit kann die Standzeit des Adsorptionsmittels um das 5- bis 10-fache verlängert werden.

Der Begriff Wasser umfasst im Rahmen dieser Erfindung verunreinigte Grund- und Abwässer verschiedenster Herkunft z. B. Grundwasser, Oberflächenwasser, Deponiesickerwasser, häusliches Abwasser, konzentriertes Abwasser, Prozessabwasser, Industrieabwasser sowie Gemische dieser Wässer.

Bei den das Wasser belastenden halogenierten Verbindungen handelt es sich insbesondere um halogenierte Kohlenwasserstoffe. Diese halogenierten Kohlenwasserstoffe können sowohl zur Klasse der aliphatischen wie auch der aromatischen Kohlenwasserstoffe gehören. Vorzugsweise enthalten die Kohlenwasserstoffe bis zu 9 C-Atome. Die Kohlenwasserstoffe sind, auch mehrfach, mit Halogenatomen substituiert, wobei Chlor bevorzugt ist. Nachfolgende Liste von halogenierten Kohlenwasserstoffen dient der Illustration ohne die möglichen Kohlenwasserstoffe hierauf beschränken zu wollen :
Tetrachlorkohlenstoff, Chloroform, 1,1,2,2-Tetrachlorethan, 1,1,1-Trichlorethan,
1,2-Dichlorethan (wegen des häufigen Vorkommens besonders bevorzugt),
1,2,3-Trichlorpropan, Tetrachlorethen, Trichlorethen, cis bzw. trans 1,2-Dichlorethen,
1, 1-Dichlorethen, cis 1,3-Dichlorpropen, 1,2-Dichlorbenzol, 1,3-Dichlorbenzol,
1,4-Dichlorbenzol, 3-Chlortoluol und Brombenzol.

Die Konzentration der halogenierten Verbindungen beträgt im allgemeinen 10 µg/l-10 g/l Wasser. Vorzugsweise liegen die Konzentrationen zwischen 100 µg/l-100 mg/l Wasser

Die möglichen Adsorptionsmaterialien zeichnen sich durch eine grosse Oberfläche (0,1-1000 m²/g) aus. Es kann sich um natürlich vorkommende oder synthetische Materialien handeln ; bevorzugt sind : Sinterglas, vulkanisches Gestein, Blähschiefer, Blähton, Sand, geschäumter oder geformter Kunststoff und Aktivkohle. Aus praktischen Gründen kommen vor allem Sinterglas, vulkanisches Gestein und Aktivkohle in Frage, wobei Aktivkohle besonders bevorzugt ist.

Die erfindungsgemäss einsetzbaren Mikroorganismen lassen sich auf vielfältige Art und Weise gewinnen. Es kann sich bei den Mikroorganismen auch um Mischpopulationen handeln. Brauchbare Mikroorganismen lassen sich aus Klärschlamm oder kontaminierten Böden isolieren, oder aber die Mikroorganismen werden bevorzugt als Reinkultur eingesetzt. Genauere Hinweise zur Isolierung und Kultivierung von Mikroorganismen sind dem Artikel von A.M. Cook et al in Experientia 39,S.1191 (1983) zu entnehmen, der hiermit Teil der Beschreibung ist. Ein besonders geeigneter Mikroorganismus zum Abbau halogenierter aliphatischer Verbindungen ist Xanthobacter autotrophicus GJ 10 (D.B. Janssen et al, Applied and Environmental Microbiology, 49,S.673 (1985)).

Bedingt durch den Nähr- und eventuellen Sauerstoffbedarf der Mikroorganismen kann es notwendig sein dem Wasser vor dem Durchgang durch den Reaktor die benötigten Nährstoffe z.B. in Form von anorganischen Salzen zuzusetzen, auch kann man gegebenenfalls die Sauerstoffkonzentration des Wassers erhöhen z.B. durch Einblasen von Luft oder (technisch) reinem Sauerstoff, durch Zudosieren von Nitrat oder $H_2O_2$. Bevorzugt für eine Zugabe von "Sauerstoff" ist eine Lösung von $H_2O_2$ in Wasser, die je nach Durchsatzmenge Wasser und den Dosiereinrichtungen in einer Konzentration von 0,5-30% zudosiert wird.

Weiterhin kann es bei stark belastetem oder schwach gepuffertem Wasser zu einer Uebersäuerung des Wassers am Ausgang des Reaktors kommen, da der Abbau der halogenierten Verbindungen zu einer Erhöhung der Halogenid-Konzentration führt. In einem solchen Fall ist es günstig, bevorzugt vor dem Fest- oder Fliessbettreaktor, dem Wasser eine Base z.B. $NaHCO_3$ zuzugeben.

Das Verfahren kann in einem Temperaturbereich von z.B. 5-60°C, vorzugsweise 10-35°C, durchgeführt werden.

Zur Durchführung des Verfahrens verwendet man übliche Fest- oder Fliessbettreaktoren.

Die folgenden Beispiele veranschaulichen die Erfindung ohne sie darauf zu limitieren.

Beispiel 1 : Eine Kolonne (Volumen : 2l), mit Aktivkohle F-400 gefüllt, wird als Festbett Umlaufreaktor betrieben. Die Aktivkohle wird mit 1,2-Dichlorethan (DCE) abbauenden Mikroorganismen (Xanthobacter autotrophicus) angeimpft. Das verwendete synthetische Grundwasser hat die folgende Zusammensetzung :

0-20 mg DCE,
1-10 mg Hefeextrakt und
0,1-0,4 mg Ammoniumhydrogenphosphat

pro Liter Leitungswasser.

Das Verhältnis der einzelnen Komponenten untereinander wird konstant gehalten. Die Leitfähigkeit des "Grundwassers" beträgt 0,3-0,5 mS/cm bei Raumtemperatur (RT). Es werden 0,4-0,5 l "Grundwasser" pro Stunde dem Kreislauf zudosiert (bzw. entnommen).

Die Zufuhr von Sauerstoff erfolgt durch Zugabe von 1% iger $H_2O_2$-Lösung zum "Grundwasser" vor dem Reaktor.

Der Abbau der DCE wird durch die Bestimmung der Differenz des Chloridgehalts beim Zulauf und beim Ablauf festgestellt.

Die nachfolgende Tabelle zeigt die Abbauleistung, die auch nach einer Unterbrechung der DCE-Zufuhr ohne erneute Impfung wieder sehr hoch ist.

|  | DCE | |
| --- | --- | --- |
| Tag | im Zulauf [mg/l] | im Ablauf [mg/l] |
| 0 | 6,9 | 0 |
| 34 | 6,8 | 2,6 |
| 60 | 8,5 | 1,2 |
| 72 | 6,1 | 0,8 |
| 130 | 12,6 | 1,2 |
| 141 | 4,8 | 0,5 |
| 172 | 10,0 | 2,2 |

Beispiel 2 : Eine Kolonne (Volumen : 300 ml) wird mit Sinterglaskugeln ($\varnothing$ 3 mm, neutralisiert) befüllt und mit DCE-abbauenden Mikroorganismen angeimpft. Das verwendete synthetische Grundwasser hat folgende Zusammensetzung :

20±2 mg DCE,
100 mg $(NH_4)_2SO_4$,
25 mg $MgSO_4 \cdot 7\ H_2O$,
500 mg $Na_2SO_4$ und
50 mg $KH_2PO_4$

pro Liter Leitungswasser.

Die Leitfähigkeit des "Grundwassers" beträgt 0,7- 1,2 mS/cm bei RT, der pH-Wert liegt bei 7-7,5.

Die Kontaktzeit des "Grundwassers" im Reaktor beträgt 2-3 h.

Die Zufuhr von Sauerstoff erfolgt durch Zugabe von 1% iger $H_2O_2$-Lösung zum "Grundwasser" vor dem Reaktor.

Der Abbau des DCE wird durch die Bestimmung der Differenz des Chloridgehaltes an Zulauf und an Ablauf festgestellt.

Die folgende Tabelle zeigt die Abbauleistung, wobei in der zweiten Hälfte des Versuches die dem Wasser zugesetzte Menge DCE und der Salze halbiert wird.

| Tag | DCE im Zulauf [mg/l] | im Ablauf [mg/l] | T [°C] |
|---|---|---|---|
| 12 | 18,7 | 7,6 | 30 |
| 32 | 21,0 | 3,6 | 30 |
| 60 | 21,4 | 2,1 | 30 |
| 75 | 21,7 | 1,4 | 20 |
| 82 | 6,5 | 0,1 | 20 |
| 95 | 9,2 | 0,2 | 20 |
| 120 | 8,5 | 0,3 | 15 |
| 140 | 7,2 | 0,4 | 10 |

## Ansprüche

1. Verfahren zur Wasserreinigung, dadurch gekennzeichnet, dass man mit halogenierten Verbindungen belastetes Wasser durch einen oder mehrere hintereinander angeordnete Fest- oder Fliessbettreaktoren leitet, welche mit einem Adsorptionsmaterial, das von einem oder mehreren Mikroorganismen besiedelt ist, gefüllt sind.

2. Verfahren gemäss Anspruch 1, dadurch gekennzeichnet, dass die Konzentration der halogenierten Kohlenwasserstoffe 10 µg/l-10 g/l Wasser beträgt.

3. Verfahren gemäss Anspruch 2, dadurch gekennzeichnet, dass die halogenierten Verbindungen halogenierte Kohlenwasserstoffe sind.

4. Verfahren gemäss Anspruch 3, dadurch gekennzeichnet, dass die halogenierten Kohlenwasserstoffe bis zu maximal 9 C-Atome enthalten.

5. Verfahren gemäss Anspruch 4, dadurch gekennzeichnet, dass die halogenierten Kohlenwasserstoffe chlorierte und/oder bromierte Kohlenwasserstoffe sind.

6. Verfahren gemäss Anspruch 5, dadurch gekennzeichnet, dass der halogenierte Kohlenwasserstoff 1,2-Dichlorethan ist.

7. Verfahren gemäss einem der Ansprüche 1 bis 6, dadurch gekennzeichnet, dass das Adsorptionsmaterial Sinterglas, vulkanisches Gestein, Blähschiefer, Blähton, Sand, geschäumter oder geformter Kunststoff oder Aktivkohle ist.

8. Verfahren gemäss Anspruch 7, dadurch gekennzeichnet, dass das Adsorptionsmaterial Sinterglas, vulkanisches Gestein oder Aktivkohle ist.

9. Verfahren gemäss Anspruch 8, dadurch gekennzeichnet, dass das Adsorptionsmaterial Aktivkohle ist.

10. Verfahren gemäss einem der Ansprüche 1 bis 9, dadurch gekennzeichnet, dass die eingesetzten Mikroorganismen aus einer Reinkultur, aus Klärschlamm oder aus kontaminierten Böden erhalten werden.

**11.** Verfahren gemäss Anspruch 10, dadurch gekennzeichnet, dass die eingesetzten Mikroorganismen aus einer Reinkultur erhalten werden.

**12.** Verfahren gemäss einem der Ansprüche 1 bis 11, dadurch gekennzeichnet, dass dem Wasser vor dem Durchgang durch den Fest- oder Fliessbettreaktor Nährstoffe und/oder Luft, Sauerstoff bzw. eine Sauerstoff freisetzende Substanz zugesetzt wird, sowie gegebenenfalls der pH-Wert angepasst wird.

**13.** Verfahren gemäss Anspruch 12, dadurch gekennzeichnet, dass man dem Wasser $H_2O_2$ zugibt.

**14.** Verfahren gemäss einem der Ansprüche 1 bis 13, dadurch gekennzeichnet, dass man dem Wasser eine Base zugibt.

**15.** Verfahren gemäss Anspruch 1, dadurch gekennzeichnet, dass man mit 0,3-30 mg/l 1,2-Dichlorethan belastetes Wasser durch einen mit Aktivkohle gefüllten Festbettreaktor leitet, wobei die Aktivkohle mit aus einer Reinkultur gewonnenen Mikroorganismen angeimpft wird und man Nährstoffe und $H_2O_2$ dem Wasser vor dem Durchgang durch den Festbettreaktor zusetzt.

**16.** Vorrichtung zur Durchführung des Verfahrens gemäss einem des Ansprüche 1-15, dadurch gekennzeichnet, dass man einen üblichen Fest- oder Fliessbettreaktor verwendet.

Europäisches
Patentamt

# EUROPÄISCHER RECHERCHENBERICHT

Nummer der Anmeldung

EP 90 81 0908

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-A-3816679 (GLOE, AXEL ET AL.) <br> * Spalte 1, Zeile 3 - Spalte 3, Zeile 14 * <br> * Spalte 4; Ansprüche 1-7 * <br> --- | 1, 3, <br> 7-12, 16 | C02F3/06 <br> C02F3/10 |
| X <br><br><br><br><br><br> A | WO-A-8808825 (SCHERING AG ET AL.) <br> * Seite 1, Absatz 1,5 * <br> * Seite 2, Absatz 5,6 * <br> * Seite 3, Absatz 1 * <br> * Seite 4, Absatz 2 * <br> * Seite 4, Absatz 4 - Seite 5, Absatz 1 * <br> * Seite 5, Absatz 5 - Seite 6, Absatz 2 * <br> * Seite 16; Ansprüche 1-4, 6 * <br><br> --- | 1, 3-6, <br> 10, 11 <br><br><br><br><br><br> 7-10 | |
| X | EP-A-300593 (E.I.DU PONT DE NEMOURS) <br> * Seite 1, Zeilen 1 - 4 * <br><br> * Seite 9; Ansprüche 1, 2, 9, 11, 12 * <br> --- | 1, 3-6, <br> 12, 13, <br> 15 | |
| D,A | APPLIED AND ENVIRONMENTAL MICROBIOLOGY <br> vol. 49, no. 3, März 1985, <br> Seiten 673 - 677; D.B.JANSSEN ET AL.: <br> "Degradation of Halogenated Aliphatic Compounds <br> by Xanthobacter autotrophicus GJ10" <br> * Seite 673 * Abstract <br> --- | 1, 3-6 | **RECHERCHIERTE SACHGEBIETE (Int. Cl.5 )** <br><br> C02F |
| A | EP-A-157317 (FRIED.KRUPP GMBH) <br> * Seite 7; Ansprüche 1, 3, 5 * <br><br> ----- | 1, 7-9, <br> 12, 15, <br> 16 | |

Der vorliegende Recherchenbericht wurde für alle Patentansprüche erstellt

| Recherchenort | Abschlußdatum der Recherche | Prüfer |
|---|---|---|
| DEN HAAG | 31 JANUAR 1991 | TEPLY J. |

EPO FORM 1503 03.82 (P0403)